# EUROPEAN PATENT APPLICATION

(11) **EP 1 415 753 A1**
(43) Date of publication of application: **06.05.2004**
(21) Application number: 03024539.3
(22) Date of filing: 27.10.2003
(51) Int. Cl.: B23K 20/12

(54) **Friction agitation welding apparatus**

(30) Priority: 28.10.2002 JP 2002313018
(71) Applicant: MAZDA MOTOR CORPORATION, Aki-gun, Hiroshima-ken (JP)
(72) Inventor: Murakami, Kotoyoshi, Fuchu-cho Aki-gun Hiroshima (JP)
(74) Representative: Zinnecker, Armin, Dipl.-Ing.

(57) **Abstract**

A friction agitation welding apparatus comprises a threaded shaft (46) fixedly connected to a motor shaft, a slide housing (48) in engagement with the threaded shaft (46) for vertical movement, a first drive shaft (58) supported for rotation by but coupled fixedly in axial movement to the slide housing (48) and equipped with a friction agitation welding tool (4), and a second drive shaft (64) fixedly connected to a motor shaft and telescopically supported by but coupled fixedly in relative rotation to the first drive shaft (58). When the threaded shaft (46) is rotated, the slide housing (48), and hence the first drive shaft (58), moves to advance the friction agitation welding tool (4) to urge superposed workpieces to be joined. When the second drive shaft (64) is rotated, the first drive shaft (58), and hence the friction agitation welding tool (4), rotates even while the friction agitation welding tool (4) urges the superposed workpieces.

## Description

### BACKGROUND OF THE INVENTION

### 1. Field of the invention

The present invention relates to a friction agitation welding apparatus.

### 2. Description of Related Art

There have been widely known welding methods using friction agitation. Such a welding method includes the step of moving a rotating welding tool downward so as to apply pressure against plate workpieces superposed on each other in an axial direction of a joint and to generate heat between the rotating welding tool and the superposed plate workpieces as the rotating welding tool so as to plasticize a workpiece material around the rotating welding tool, thereby allowing the rotating welding tool to penetrate into the plate workpiece. The penetration of the rotating welding tool results in a plastic flow of a material of one of the superposed plate workpieces adjacent an interface of the superposed plate workpieces, thereby forming a spot weld across the joint near an interface between the superposed plate workpieces.

A device for implementing the friction agitation welding method that is disclosed, for example, in U.S. Patent Application Publication 2001/0045447. The prior art friction agitation welding device comprises a threaded shaft engaged with a nut that has a support arm extending apart from the threaded shaft, a base mount secured to a distal end of the support arm and mounting an induction motor to which a friction agitation welding tool is connected for rotation. The threaded shaft is rotated by a servo motor to move the nut, and the friction agitation welding tool mounted to the induction motor, in an axial direction of welding so as thereby to urge the friction agitation welding tool and the superposed plate workpieces together in the axial direction of welding. When rotating the friction agitation welding tool by the induction motor while urging the friction agitation welding tool and the superposed plate workpieces together in the axial direction of welding, frictional heat is generated to create a plasticized region in a workpiece material of the superposed plate workpieces around the friction agitation welding tool.

The prior art friction agitation welding device with the friction agitation welding tool and the induction motor, that is a heavy load, mounted together to the base mount has a drawback that it is difficult for the friction agitation welding tool to perform precise control of urging pressure exerted on the superposed plate workpieces because the induction motor, exercises its influence on the urging pressure by the friction agitation welding tool when the friction agitation welding tool is changed in welding position.

### SUMMARY OF THE INVENTION

It is therefore an object of the present invention to provide a friction agitation welding apparatus that performs friction agitation welding of superposed plate workpieces under precisely controlled urging pressure.

The foregoing object of the present invention is accomplished by a friction agitation welding apparatus for forming a weld across a joint between superposed plate workpieces by rotating a friction agitation welding tool about an axis of welding while urging the friction agitation welding tool and the superposed plate workpieces together in an axial direction of welding whereby generating frictional heat to create a plasticized region in a workpiece material around the friction agitation welding tool and allowing the plasticized workpiece material to solidify to form a weld across the joint. The friction agitation welding apparatus comprises a base support, a threaded shaft rotatably mounted to the base support, a first drive source fixedly mounted on the base support to rotate the threaded shaft, an elevating housing engaged with the threaded shaft to move along the threaded shaft resulting from rotation of the threaded shaft so as thereby to urge the friction agitation welding tool and the superposed plate workpieces together in the axial direction of welding, a first drive shaft mounted to the elevating housing, rotatably about the axis of welding but fixedly in movement in the axial direction of welding, and mounting friction agitation welding tool to an distal end thereof, a second drive shaft mounted coaxially with the first drive shaft , fixedly in rotation relative to the first drive shaft but movably in an axial direction of the first drive shaft, and a second drive source fixedly mounted on the base support to rotate the second drive shaft.

According to the friction agitation welding apparatus of the present invention in which the first drive shaft is coaxially telescopically coupled to the second drive shaft but prevented from rotating about the axial direction of welding relatively to the second drive shaft, rotation of the second drive shaft is transmitted to the first drive shaft, and hence the friction agitation welding tool. Therefore, the first drive shaft can telescopically move relative to the second drive shaft keeping itself impossible to rotate relatively to the second drive shaft even while rotating, resulting in urging the friction agitation welding tool and the superposed plate workpieces together without affecting the rotation of the friction agitation welding tool. Resulting from the mounting structure in which the drive source is fixedly mounted on the base mount separately from the elevating housing, only the elevating housing and the first drive shaft are the parts that move in order to urge the friction agitation welding tool and the workpieces together, so that the welding apparatus is markedly reduced in weight. Therefore, the welding apparatus appropriately controls urging pressure between the friction agitation welding tool and the superposed plate workpieces even when the welding apparatus is in any welding position.

It is preferred that the elevating housing comprises a cylindrical casing enclosing said first drive shaft therein and extending near the distal end of the first drive shaft and the cylindrical casing is mounted for axial movement to the support base through a bearing at a tip end opposite to the distal end. According to this structure, the elevating housing is effectively prevented from causing deformation, that leads to rotational fluctuations of the friction agitation welding tool, at a location near the friction agitation welding tool.

The friction agitation welding apparatus further comprises a back-up tool fixedly mounted in aligned with and spaced apart from the friction agitation welding tool to the base support so as to support the superposed plate workpiece. This is contributory to reliable friction agitation welding.

It is preferred that the friction agitation welding apparatus is installed to a robot in the case where there are a number of occasions when it is applied in different welding positions.

### BRIEF DESCRIPTION OF THE DRAWINGS

The above and other objects and features of the present invention will be understood from the following description of a specific embodiment thereof when considering in conjunction with the accompanying drawings, wherein the same reference numerals denote same or similar parts throughout the drawings, and in which:
Figures 1 is a schematic view of a robotic welding machine according to a preferred embodiment of the present invention;
Figures 2 is a schematic front view of a welding head;
Figures 3 is a schematic side view of the welding head;
Figures 4 is a top view of the welding head;
Figures 5 is a cross-sectional view of the welding head taken along line V-V of Figure 4;
Figures 6 is a bottom view of the welding head;
Figures 7 is a cross-sectional view of the welding head taken along line VII-VII of Figure 4;
Figures 8 is a schematic view of a robotic welding machine according to another preferred embodiment of the present invention;
Figures 9 is a schematic view of a robotic welding machine according to still another preferred embodiment of the present invention; and
Figures 10 is a schematic view of a robotic welding machine according to a further preferred embodiment of the present invention.

### DETAILED DESCRIPTION OF THE SPECIFIC EMBODIMENT

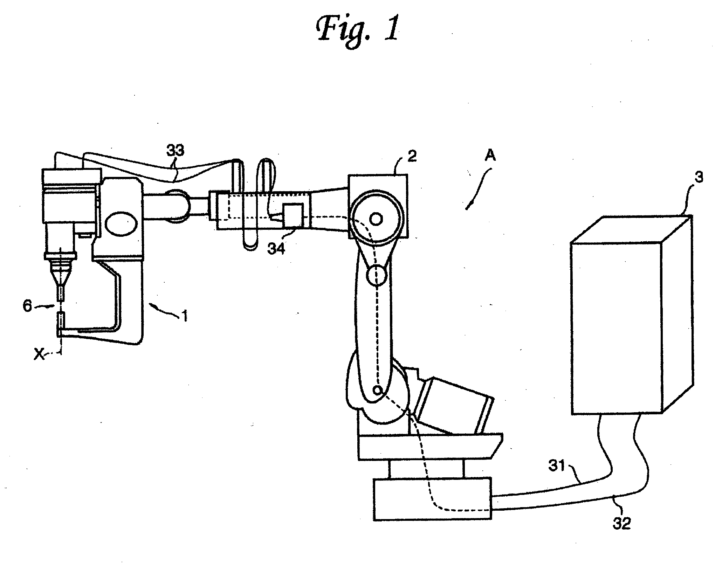

Referring to the drawings in detail, and, in particular, to Figure 1 showing a robotic welding machine A for implementing friction agitation welding according to a preferred embodiment of the present invention, the robotic welding machine A is used, for example, to form a weld across a joint between two superposed plate workpieces (not shown) such as an aluminum alloy plate workpiece and a steel plate workpiece for vehicle bodies, which are positioned in superposed relation. The robotic welding machine A basically comprises a welding head positioning robot 2 having a robot arm with a welding head 1 and a control unit 3 for controlling operation of the welding head positioning robot 2 and the welding head 1. The welding head positioning robot 2 operates to position the welding head 1 with respect to a welding spot of superposed plate workpieces. A general purpose six-shafts vertical articulated manipulator may be employed for the welding head positioning robot 2.

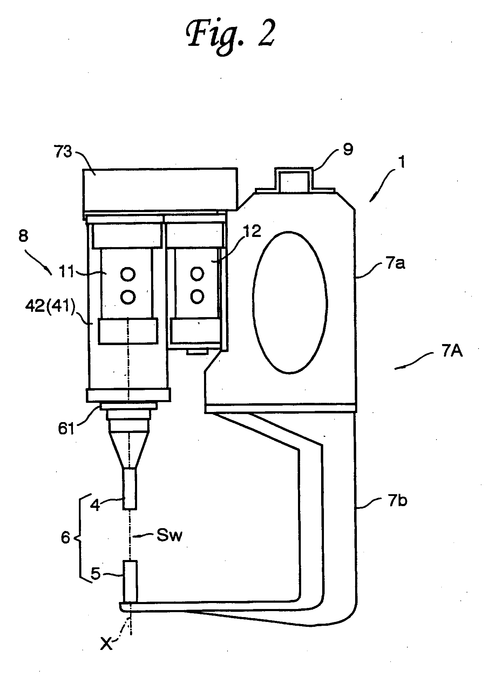

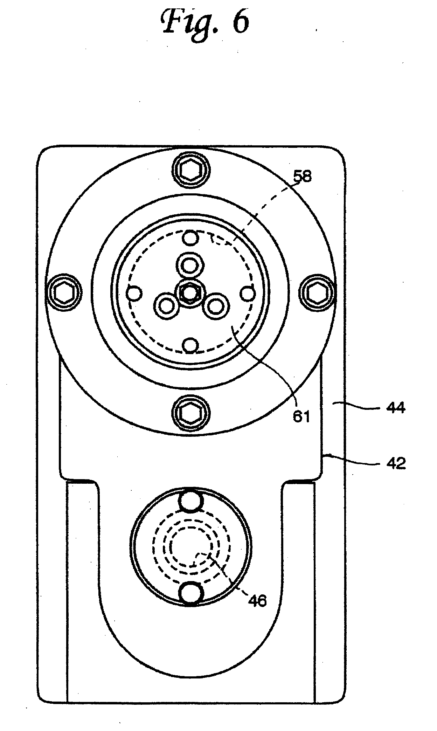

Figures 2 to 7 showing the welding head 1 in detail, the welding head 1 includes a mounting frame 7A and a welding unit 8. The mounting frame 7A has a mounting block 7a and a generally L-shaped frame arm 7b fixedly secured to the mounting block 7a. The mounting block 7a at its top is provided with an attaching bracket 9 through which the welding head 1 is attached to the welding head positioning robot 2. The frame arm 7b extends toward right below the welding device 6 to hold a back-up tool 5 forming a part of a friction agitation welding device 6 which will be described in detail late.

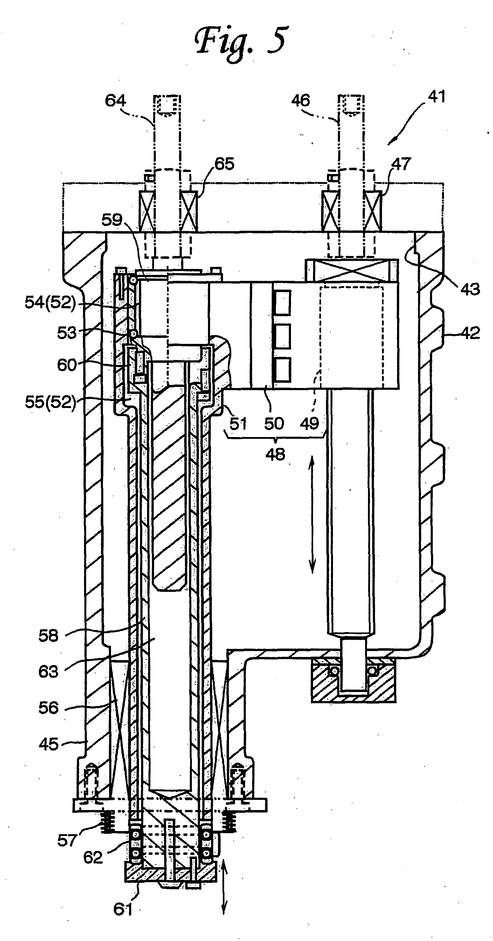

The welding unit 8 that performs friction agitation welding is made up of a welding device 6 comprising a rotatably driven friction agitation welding tool (which is referred to as a friction agitation welding tool for simplicity) 4 and a back-up tool 5 and a driving mechanism 41 including motors 11 and 12. The driving mechanism 41 has a round-ended flat casing 42 that is secured to the mounting block 7a of the mounting frame 7B with a major axis extending perpendicularly to the mounting block 7a of the mounting frame 7B and serves as a part of a base structure. The casing 42 has an opening 43 surrounded by a flange 44 at a top end thereof in a vertical direction and a lower cylindrical barrel extension 45 extending downward at one side of the casing 42 remote from the mounting block 7a of the mounting frame 7B. As shown in Figure 5, the welding head 1 is provided with a threaded shaft 46 in the casing 42. The threaded shaft 46 has a vertical axis of rotation perpendicular to the major axis of the casing 42 and extends close to one end of the casing 42 adjacent to the mounting frame 7B. The threaded shaft 46 protrudes from the top of the casing 42 at an upper side thereof and is rotatably supported at a lower end thereof within the casing 42. The threaded shaft 46 is engaged by an elevating barrel housing 48. More specifically, the elevating barrel housing 48, that is formed as one integral piece, comprises a threaded slide 49 and an open-ended cylindrical barrel 51 which are arranged in a direction of the major axis (which is refereed to as a lengthwise direction) of the casing 42 and coupled together by a coupling arm 50. The threaded slide 49 engages the threaded shaft 46 and moves up and down when the threaded shaft 46 rotate. The cylindrical barrel 51 extends in a vertical direction on one side of the threaded shaft 46 remote from the mounting frame 7B and has an upper portion expanded in diameter through which the cylindrical barrel 51 is coupled to the threaded slide 49 by the coupling arm 50. The upper portion of the cylindrical barrel 51 provides an annular space 52 for receiving associated members including a bearing 53 therein. The annular space 52 is divided into two spaces, namely an upper annular space 54 defined by the bearing 53 and a lower annular space 55 larger in diameter than the upper annular space 54. The cylindrical barrel 51 at its lower end portion protrudes from the lower cylindrical barrel extension 45 and supported for up and down movement by a bearing 56 mounted within the lower cylindrical barrel extension 45. External part of the cylindrical barrel 51 out of the lower cylindrical barrel extension 45 is covered by a telescopic bellows 57 disposed between lower ends of the cylindrical barrel 51 and the lower cylindrical barrel extension 45.

The welding head 1 is provided with a first drive shaft 58 extending along the entire length of the cylindrical barrel 51 within the cylindrical barrel 51. The first drive shaft 58 has two upper shaft sections located within the annular space 52 of the cylindrical barrel 51, namely a top shaft section 59 having an external diameter greater than a major portion of the first drive shaft 58 and a mid shaft section 60 having an external diameter greater than the top section 59, and an axial bore 63 extending from the top end near to the lower end. The first drive shaft 58 has keys or key-ways for spline-coupling formed on or in the wall of the axial bore 63 adjacent to the top and mid shaft sections 59 and 60. The first drive shaft 58 at its top shaft section 59 is supported, rotatably but fixedly in vertical movement, by the cylindrical barrel 51 through the bearing 53 suited within the upper annular space 54 of the cylindrical barrel 51. The mid shaft section 60 is located within the lower annular space 55 of the cylindrical barrel 51 to face the bearing 53. The first drive shaft 58 at its lower end slightly protrudes from the lower end of the cylindrical barrel 51 and is provided with a mounting head 61 for detachably mounting the friction agitation welding tool 4 to the first drive shaft 58. The first drive shaft 58 at its lower end is supported, rotatably but fixedly in vertical movement, by the cylindrical barrel 51 through the bearing 62 secured to the bottom end of the cylindrical barrel 51. Accordingly, the first drive shaft 58 is united with the cylindrical barrel 51 in vertical movement and, however, separated in rotation.

The welding head 1 is further provided with a second drive shaft 64 extending in the axial bore 63 to a mid portion of the first drive shaft 58. The second drive shaft 64 has external keys or external key-ways for spline-coupling. The first and second drive shafts 58 and 64 are telescopically coupled together to allow relative vertical movement between them but prevented from causing relative rotation between them.

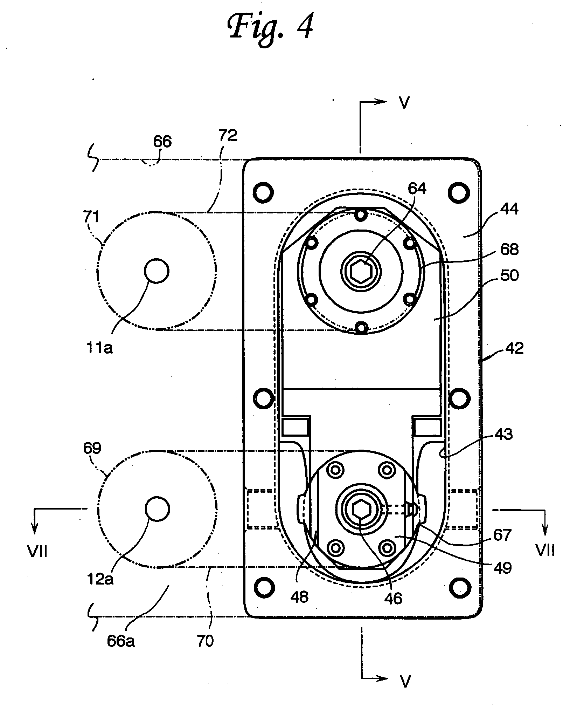

As shown in Figures 4, 5 and 7, the welding head 1 includes a motor bracket 66 forming a part of the base structure secured to the flange 44 of the casing 42. The motor bracket 66 covers one end portion of the casing 42 in a lengthwise direction of the casing 42 remote from and extends overhangs the flange 44 in a direction perpendicular to the major axis (which is referred to as a transverse direction) of the casing 42. This overhang portion 66a is used to mount the motors 11 and 12 to the casing 42. The motor bracket 66 at a part covering the end portion of the casing 42 is provide with bearings 47 and 53 by which the threaded shaft 46 and second drive shaft 64 are supported respectively, rotatably but fixedly in vertical movement with respect to the casing 42. Accordingly, the relative up and down movement between the first and second drive shafts 58 and 64 result in up and down movement of the first drive shaft 58 relative to the second drive shaft 64. These threaded shaft 46 and second drive shaft 64 protrude upward from the motor bracket 66 and are provided with pulleys 67 and 68, respectively.

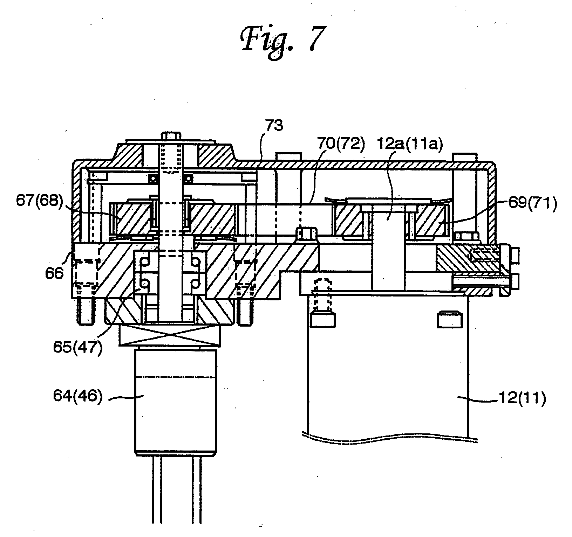

As shown in Figure 7, the motor 12, that is desirably a servo motor, has an output shaft 12a mounted to the overhang portion 66a of the motor bracket 66 and aligned with the threaded shaft 46 in the transverse direction. The output shaft 12a of the motor 12 protrudes upward from the motor bracket 66 and is provided with a pulley 69. A belt 70 is mounted between the pulleys 67 and 69 of the threaded shaft 46 and the output shaft 12a of the motor 12 to transmit rotation of the output shaft 12a of the motor 12 to the threaded shaft 46. Further, the motor 11, that is desirably a servo motor or an induction motor, has an output shaft 11 a mounted to the overhang portion 66a of the motor bracket 66 and aligned with the second drive shaft 64 in the transverse direction. The output shaft 11 a of the motor 11 protrudes upward from the motor bracket 66 and is provided with a pulley 79. A belt 72 is mounted between the pulleys 68 and 71 of the second drive shaft 64 and the output shaft 11 a of the motor 11 to transmit rotation of the output shaft 11 a of the motor 11 to the second drive shaft 64. These pulleys 67 to 69 and 71 are covered by a top cap 73. As the same rotation transmission mechanism as between the motor 12 and the threaded shaft 46 is installed between the motor 11 and the second drive shaft 64, each corresponding part of the rotation transmission mechanism between the motor 11 and the second drive shaft 64 is indicated by a parenthetic reference number in Figure 7.

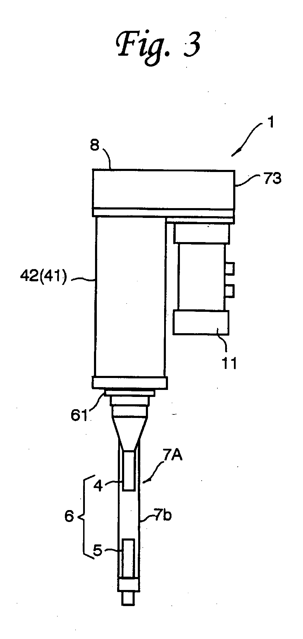

As shown in Figures 2 and 3, the friction agitation welding tool 4 forming a part of the friction agitation welding device 6 is detachably mounted to the mounting head 61 in alignment with the back-up tool forming another part of the friction agitation welding device 6. The friction agitation welding tool 4 secured to the elevating barrel housing 48 is, on one hand, moved up and down along the axis of welding resulting from rotation of the threaded slide 49 caused by the motor 12. rotation of the threaded shaft 46 and, on the other hand, rotated about the axis of welding resulting from rotation of the first and second drive shafts 58 and 64 caused by the motor 11. When the rotating friction agitation welding tool 4 is moved downward to apply thrust pressure to workpieces to be welded, such as superposed plates, backed-up with the back-up tool 5, friction heat is generated while urging the rotating friction agitation welding tool 4 and the workpieces to plasticize a workpece material that forms a weld across a joint between the workpieces when cooled and solidified.

Referring back to Figure 1, the control unit 3 is electrically connected to the welding head positioning robot 2 through harness 31 and to the welding head 1 through harness 32, a relay box 34 and harnesses 33. The control unit 3 controls eight shafts, namely two rotary shafts of the motors 11 and 12 and six articulation shafts of the welding head positioning robot 2.

Friction agitation welding of workpieces using the robotic welding machine A will be described below. Specifically, when friction agitation welding starts, the control unit 3 causes the welding head positioning robot 2 to manipulate the welding head 1 to position the workpieces in a work-receiving space Sw (see Figure 2) between the friction agitation welding tool 4 and the back-up tool 5 and then to actuate the motors 11 and 12. The motor 12 rotates the threaded shaft 46 in a normal direction to move the threaded slide 49, and hence the elevating barrel housing 48, downward, thereby forcing the elevating barrel housing 48 to protrude from the casing 42. The down movement of the elevating barrel housing 48 results in down movement of the first drive shaft 58 relative to the second drive shaft 64, so as thereby to apply thrust pressure against the workpieces. Simultaneously, the motor 11 rotates the second drive shaft 64, and hence the first drive shaft 58 spline-coupled to the second drive shaft 64, o as thereby to rotate the friction agitation welding tool 4. As the first drive shaft 58 is telescopically coupled to the second drive shaft 64 by means of spline-coupling, the friction agitation welding tool 4 continuously urges the workpieces without having an effect on its rotation.

As a resulting from the mounting structure in which the motor 11 is fixedly mounted on the motor bracket 66 separately from the elevating barrel housing 48, only the elevating barrel housing 48 and the first drive shaft 58 are the parts that move in order to urge the friction agitation welding tool 4 and the workpieces together, the welding head 1 is markedly reduced in weight. Therefore, the welding head 1 controls the friction agitation welding tool 4 to apply pressure to the workpieces in any welding position. Further, the elevating barrel housing 48 is effectively prevented from causing deformation (deformation of the coupling arm 50 and the cylindrical barrel 51 about the threaded slide 49 as a supporting point), that leads to rotational fluctuations of the friction agitation welding tool 4, at a location near the friction agitation welding tool 4 as a result of the mounting structure in which the bearing 56 mounted within the lower cylindrical barrel extension 45 supports one end of the cylindrical barrel 51 of the elevating barrel housing 48.

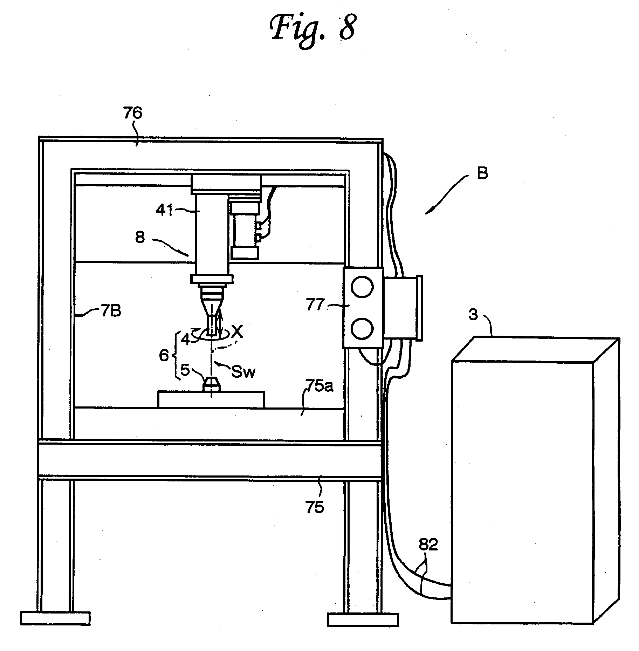

Figure 8 shows a welding machine B for implementing friction agitation welding according to another preferred embodiment of the present invention in which a manually operated welding unit 8 is stationarily installed. As shown in Figure 8, the welding machine B basically comprises a stationary trestle frame 7B, a manually operated welding unit 8 and a control unit 3 for controlling the friction agitation welding by the welding unit 8. The a stationary trestle frame 7B has lower and upper beams 75 and 76. The welding unit 8 that is manually operated to perform friction agitation welding is made up of a welding device 6 comprising a friction agitation welding tool 4 and a back-up tool 5 and a driving mechanism 41 that are the same in structure and operation as those of the previous embodiment. The driving mechanism 41 is attached to the upper beam 76 of the stationary trestle frame 7B. The friction agitation welding tool 4 is detachably mounted to the drive mechanism 41. The back-up tool 5 is mounted on a table 75a secured to the lower beam 75 of the stationary trestle frame 7B. These friction agitation welding tool 4 and back-up tool 5 are aligned with an axis of welding X and spaced apart to define a work-receiving space Sw for receiving the superposed plate workpieces (not shown) therein. The stationary trestle frame 7B is provided with a start switch 77 electrically connected between the driving mechanism 71 and a control unit 3 through harnesses 82.

Superposed plate workpieces is positioned in the work-receiving space Sw with a welding spot aligned with the axis of welding X. The friction agitation welding by the welding unit 8 is manually performed under control of the control unit 3 when the start switch 77 is pushed.

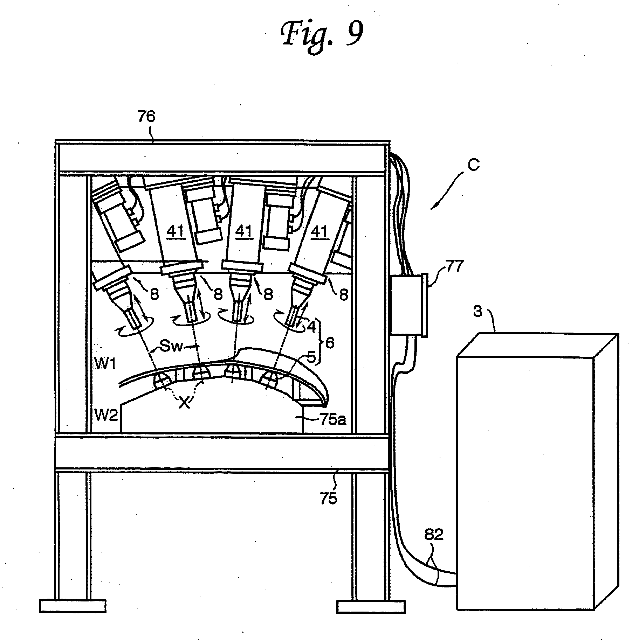

Figure 9 shows a welding machine C for implementing friction agitation welding according to still another preferred embodiment of the present invention in which a plurality of stationary automatic welding unit 8 are installed. The welding machine C is used, for example, to form a plurality of welds across joints between two superposed plate workpieces W1 and W2 such as an aluminum alloy plate workpiece and a steel plate workpiece for vehicle bodies. As shown in Figure 9, the welding machine C basically comprises a stationary trestle frame 7B, a plurality of welding unit 8 and a control unit 3 for controlling the friction agitation welding by the welding unit 8. The stationary trestle frame 7C has lower and upper beams 75 and 76. Each of the welding units 8 is made up of a welding device 6 comprising a friction agitation welding tool 4 and a back-up tool 5 and a driving mechanism 41 that are the same in structure and operation as those of the previous embodiments. The welding devices 8 are inclined according to welding spots on the superposed plate workpieces W1 and W2. The driving mechanism 41 is fixedly attached to the upper beam 75 of the stationary trestle frame 7C. The friction agitation welding tool 4 is detachably mounted to the drive mechanism 41. The back-up tool 5 is mounted on a table 75a secured to the lower beam 75 of the stationary trestle frame 7C. These friction agitation welding tool 4 and back-up tool 5 are aligned with an axis of welding X and spaced apart to define a work-receiving space Sw for receiving the superposed plate workpieces W1 and W2 therein. The stationary trestle frame 7B is provided with a start switch 77 electrically connected between the driving mechanism 71 and a control unit 3 through harnesses 82.

Superposed plate workpieces W1 and W2 are positioned in the work-receiving space Sw with welding spots aligned with the axes of welding X, respectively, by an operator or using a robotic manipulator. The friction agitation welding by the welding unit 8 is automatically performed under control of the control unit 3 when the start switch 77 is pushed.

The welding machine C may comprise a single welding unit 8 that is shifted and inclined according to welding spots on the workpieces W1 and W2.

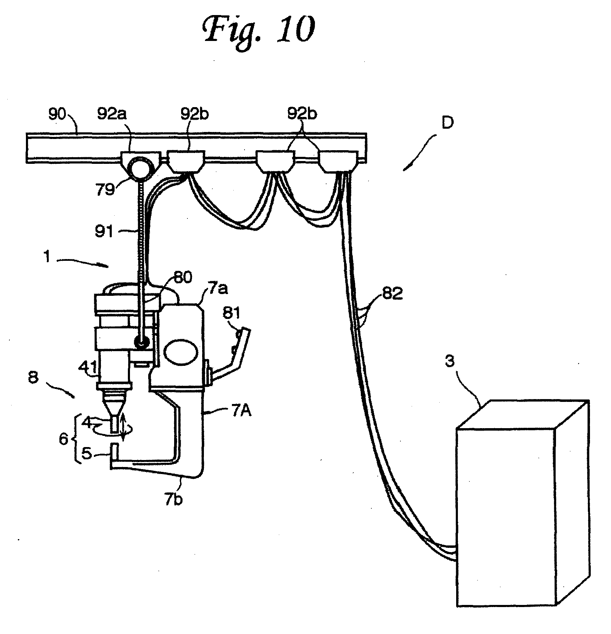

Figure 10 shows a welding machine D for implementing friction agitation welding according to a further preferred embodiment of the present invention in which a suspended welding head 1 is employed. As shown in Figure 8, the welding machine D basically comprises a a welding head 1 that is the same in structure and operation as that shown in Figures 2 to 7 but suspended from a stationary guide rail 90. Specifically, the welding head 1 includes a welding unit 8 provided with a hanging arm 80. The welding unit 8 is made up of a welding device 6 comprising a rotatably driven friction agitation welding tool 4 and a back-up tool 5 and a driving mechanism 41 including motors (not shown). A mounting frame 7A has a mounting block 7a and a generally L-shaped frame arm 7b fixedly secured to the mounting block 7a. The driving mechanism 41 is fixedly mounted to the mounting block 7a of the mounting frame 7A. The friction agitation welding tool 4 is rotatably attached to the driving mechanism 41. The back-up tool 5 is fixedly 1 5 mounted to the frame arm 7b of the mounting frame 7A. The welding head 1 is further provided with a start switch 81.

The welding head 1 is suspended from the guide rail 90 through an expansion suspensory wire 91 connected between the hanging arm 80 and a guide slide 92a slidably mounted to the guide rail 90. The guide slide 92a is provided with a balancing weight 93 for adjusting the welding head 1 in a desired welding position. The welding unit 8 is electrically connected to a control unit 3 through harnesses 82 supported by a plurality of guide slides 92b slidably mounted to the guide rail 90.

In friction agitation welding operation, the welding head 1 is manually handled by an operator to be moved toward superposed plate workpieces (not shown) located in a predetermined welding station and to take a proper welding position with respect to a welding spot on the superposed plate workpieces.

It is to be understood that although the present invention has been described with regard to preferred embodiments thereof, various other embodiments and variants may occur to those skilled in the art, which are within the scope and spirit of the invention, and such other embodiments and variants are intended to be covered by the following claims.

## Claims

1. A friction agitation welding apparatus for forming a weld across a joint between superposed plate workpieces by rotating a friction agitation welding tool about an axis of welding while urging the friction agitation welding tool and the superposed plate workpieces together in an axial direction of welding whereby generating frictional heat to create a plasticized region in a workpiece material around the friction agitation welding tool and allowing the plasticized workpiece material to solidify to form a weld across said joint, said friction agitation welding apparatus comprising:
a base support;
a threaded shaft rotatably mounted to said base support;
a first drive source fixedly mounted on said base support to rotate said threaed shaft;
an elevating member engaged with said threaded shaft to move along said threaded shaft resulting from rotation of said threaded shaft so as thereby to urge the friction agitation welding tool and the superposed plate workpieces together in the axial direction of welding;
a first drive shaft mounted to said elevating member, rotatably about the axis of welding but fixedly in movement in the axial direction of welding, and mounting friction agitation welding tool to an distal end thereof;
a second drive shaft mounted coaxially with said first drive shaft , fixedly in rotation relative to said first drive shaft but movably in an axial direction of said first drive shaft; and
a second drive source fixedly mounted on said base support to rotate said second drive shaft.

2. A friction agitation welding apparatus as defined in claim 1, wherein said elevating member comprises a cylindrical casing enclosing said first drive shaft therein and extending near said distal end of said first drive shaft, said cylindrical casing being mounted for axial movement to said base support through a bearing at a tip end opposite to said distal end.

3. A friction agitation welding apparatus as defined in claim 1, and further comprising a back-up tool fixedly mounted in aligned with and spaced apart from the friction agitation welding tool to said base support so as to support the superposed plate workpiece at a side remote from the friction agitation welding tool.

4. A friction agitation welding apparatus as defined in claim 3, wherein said friction agitation welding apparatus is adapted to be detachably installed to a robot.
